# EUROPEAN PATENT SPECIFICATION

(11) **EP 0 677 959 B1**
(45) Date of publication and mention of the grant of the patent: **07.04.1999**
(21) Application number: 95300019.7
(22) Date of filing: 03.01.1995
(51) Int. Cl.: H04N 5/44, H04N 5/20

(54) **Picture information detecting apparatus for a video signal**
Vorrichtung zum Detektieren von Bildinformation für ein Videosignal
Dispositif de détection de l'information d'image pour un signal vidéo

(30) Priority: 15.04.1994 JP 77091/94
(43) Date of publication of application: 18.10.1995
(73) Proprietor: MATSUSHITA ELECTRIC INDUSTRIAL CO., LTD., Kadoma-shi, Osaka-fu, 571 (JP)
(72) Inventor: Kawabata, Minoru, Sakai-shi, Osaka 588 (JP); Kageyama, Atsuhisa, Ibaraki-shi, Osaka 567 (JP)
(74) Representative: Crawford, Andrew Birkby

(56) References cited:
- EP-A- 0 460 595
- EP-A- 0 467 602
- EP-A- 0 520 339
- EP-A- 0 633 690
- US-A- 4 811 101
- PATENT ABSTRACTS OF JAPAN vol. 15 no. 311 (E-1098) ,8 August 1991 & JP-A-03 113970 (SHARP CORP) 15 May 1991,
- PATENT ABSTRACTS OF JAPAN vol. 18 no. 99 (E-1510) & JP-A-05 300448 (SHARP CORP) 12 November 1993,
- PATENT ABSTRACTS OF JAPAN vol. 17 no. 317 (E-1382) ,16 June 1993 & JP-A-05 030386 (SANYO ELECTRIC CO LTD) 24 July 1991,
- PATENT ABSTRACTS OF JAPAN vol. 18 no. 416 (E-1588) ,4 August 1994 & JP-A-06 125481 (FUJITSU GENERAL LTD) 6 May 1994,
- PATENT ABSTRACTS OF JAPAN vol. 18 no. 416 (E-1588) ,4 August 1994 & JP-A-06 125482 (FUJITSU GENERAL LTD) 6 May 1994,
- PATENT ABSTRACTS OF JAPAN vol. 18 no. 535 (E-1615) ,12 October 1994 & JP-A-06 189221 (SHARP CORP) 8 July 1994,

## Description

### BACKGROUND OF THE INVENTION

### (1)Field of the Invention

The present invention relates to a picture information detecting apparatus for a video signal for improving television picture quality.

### (2)Description of the Prior Art

Document of PATENT ABSTRACTS OF JAPAN, vol. 18, no 99 (E-1510) 12 NOV. 1993 (JP-A-05 300 448) discloses the video control of pictures with different aspect ratios with high accuracy by detecting whether the picture of the input video signal is laterally long or not and switching the detecting area of a peak value or the like based on the detected result.

Recently, as screen sizes of color televison receivers are becoming larger, various kinds of picture quality compensating apparatus are considered to be important in order to prevent picture suppression and black level bouying, improve picture gradation and realize a higher picture quality.

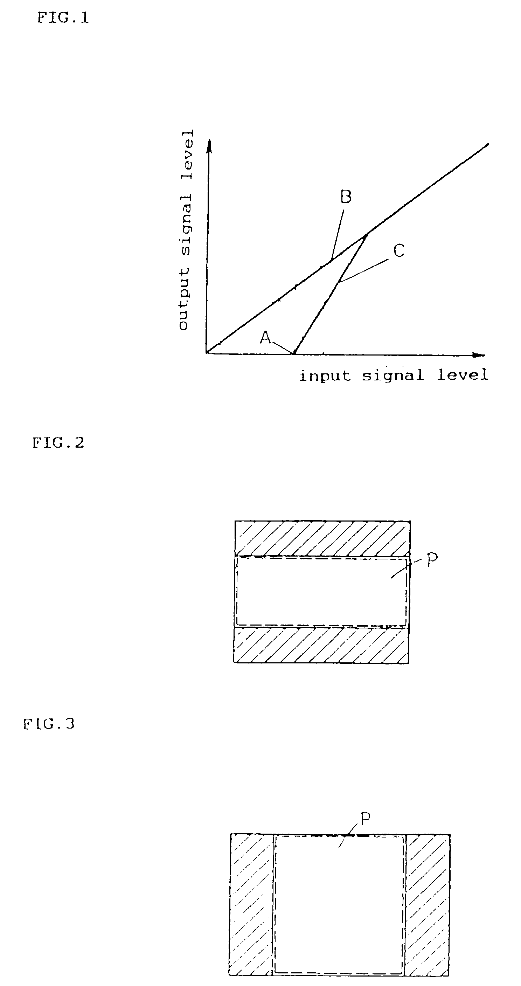

FIG.1 shows an input-output characteristic of a black level compensating circuit, one of picture quality compensating apparatus for a video signal in accordance with the prior art. Here, the input signal is a luminance signal, the abscissa is an input signal level of the black level compensating circuit and the ordinate is an output signal level. The point A is a minimum brightness level of the input signal, the curve B is an input-output characteristic without compensation and the curve C is an input-output characteristic with compensation.

If black level compensation is not applied as indicated by the curve B, a picture which minimum brightness level is in the point A appears as a picture which black level is bouyant. To improve picture gradation, the minimum brightness level of the output signal should be lowered near the pedestal level which has no level drift due to black level compensation. Explaining it using FIG.1, the slant of the characteristic curve B without compensation is made steep and is compensated so that the minimum brightness level comes near the pedestal level.

Thus, black level bouying can be prevented and the gradation of the black part can be improved by processing the luminance signal at the black level compensating circuit. The compensating circuit is controlled so that the higher the average picture level is, the stronger the compensation effect is.

However, in the above-described circuit, misfunction sometimes occurs when a video signal which the aspect ratio (width to height) of the essential picture area is larger than that of the screen, the signal level of the area except the essential picture area is the black level and has horizontal black bands on the upper and lower portions on the screen such as a high definition television signal is displayed on the screen with an aspect ratio 4:3 as shown in FIG.2, or when a video signal which the aspect ratio of the essential picture area is 4:3 and has vertical black bands on the right and left portions of the screen is displayed on the screen with an aspect ratio 16:9 as shown in FIG.3.

The cause of the misfunction is that the picture information detection such as minimum brightness level detection necessary for black level compensation and APL detection should be made in the area where the picture actually exsists and is indicated as P in FIGs.2 and 3, but the detection is made also in the upper and lower or the right and left black bands outside of the picture area P.

For example, the minimum brightness detecting circuit sometimes does not always detect the minimum brightness level of the video signal but detects the brightness level in the black bands or the APL detecting voltage sometimes appears to be a lower voltage than the essential detecting voltage. Thus, the above-described circuit has a problem that the black level compensation does not function normally due to the misfunction of the detecting circuit.

### SUMMARY OF THE INVENTION

The present invention provides apparatus for adjusting picture quality of a video input signal comprising:
a picture area signal output circuit means for outputting a signal which identifies a picture area of said video input signal;
a picture information detecting circuit means for detecting picture information which is necessary for compensating the picture quality from said picture area of said video input signal identified by said picture area signal; and
a picture quality compensating circuit means for compensating said video input signal to optimise picture quality on the basis of said detected picture information.

In one embodiment, the picture area signal output circuit means identifies said picture area using data specifying previously designated horizontal and vertical screen positions whereby said picture information is identified independent of the aspect ratio of the video input signal.

In another embodiment, the picture area signal output circuit means detects horizontal and vertical position data which enable detection of picture information from a video input signal with a different aspect ratio from the aspect ratio of a particular screen whereby optimum picture information is detected even if the aspect ratio of the video input signal is different from the aspect ratio of the screen.

In these arrangements, a signal in the essential picture area excluding the black band portions in the upper and lower or right and left sides of the screen from the video input signal is outputted from the picture area signal output circuit means and the picture information necessary for picture quality compensation such as minimum brightness level is detected in the area designated by the picture area signal and from the video input signal at the picture information detecting circuit means. The video input signal is compensated at the picture quality compensating circuit using this detected data so as to get an optimum picture quality and then a gradation compensated video signal is outputted.

In another embodiment, the apparatus further comprises a second generation extended definition television discriminating circuit means for discriminating if the video input signal is a video signal having a second generation extended definition television standard with an aspect ratio 16:9 or not:
said picture area signal output circuit means outputting a picture area signal fixing the horizontal and vertical positions to detect picture information so that the aspect ratio is 16:9 when the video input signal is judged to be a second generation extended definition television signal, whereby optimum picture information is detected when the second generation extended definition television signal with an aspect ratio 16:9 is input.

Thus, a picture information detecting apparatus for a video signal is realised which normal picture information can be detected even when a video signal with a different aspect ratio from that of the screen is inputted.

### BRIEF DESCRIPTION OF THE DRAWINGS

FIG. 1 shows an input-output characteristic of a black level compensating circuit, one of picture quality compensating apparatus for a video signal in accordance with the prior art.

FIG. 2 is a conceptional illustration when a horizontally long picture is displayed on a screen with an aspect ratio 4:3.

FIG. 3 is a conceptional illustration when a picture with an aspect ratio 4:3 is displayed on a screen with an aspect ratio 16:9.

FIG. 4 is a block diagram of a picture information detecting apparatus for a video signal in accordance with a first exemplary embodiment of the present invention.

FIG. 5 is a block diagram of a picture information detecting apparatus for a video signal in accordance with a second exemplary embodiment of the present invention.

FIG. 6 is a conceptional illustration when a video signal with a different aspect ratio from that of the screen.

FIG. 7 is a block diagram of a picture information detecting apparatus for a video signal in accordance with a third exemplary embodiment of the present invention.

FIG. 8 is an imaginary illustration of a scene which is easy to misfunction at picture area detection (a scene of a moon in a night sky).

### DETAILED DESCRIPTION OF THE INVENTION

### (First exemplary embodiment)

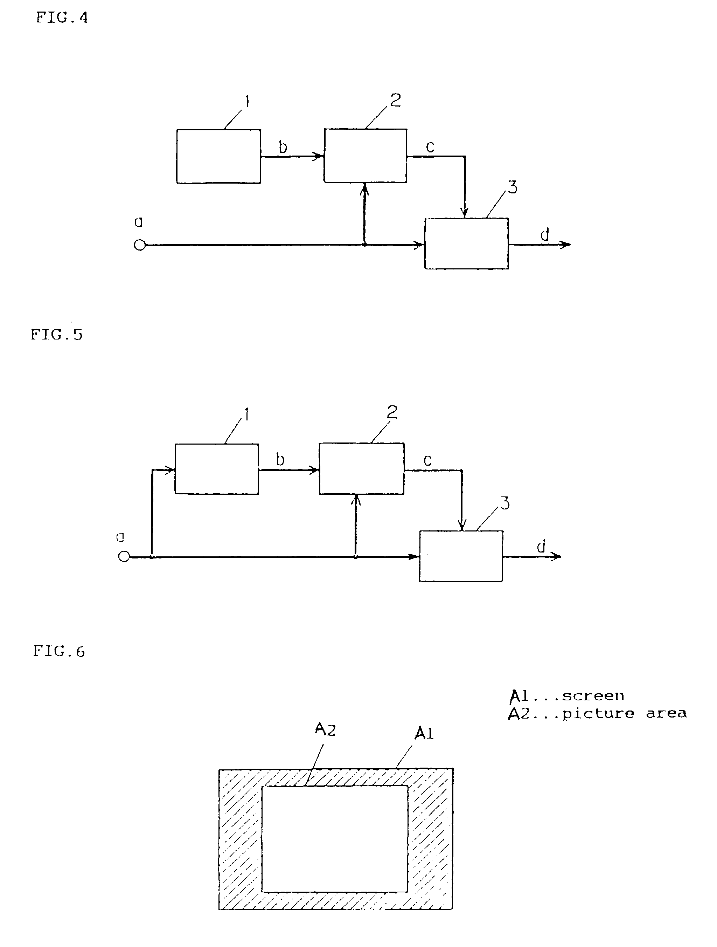

FIG. 4 is a block diagram of a picture information detecting apparatus for a video signal in accordance with a first exemplary embodiment of the present invention.

To detect picture information necessary for compensating picture quality, it is necessary to designate an area to detect picture information. Therefore, horizontal and vertical positions which can be detected over the whole screen are previously designated in the picture area signal output circuit 1. Based on the designated positions, the picture area signal *b* which determines the area for picture information detection is outputted. The picture information is detected in the area from the video input signal *a* at the picture information detecting circuit 2 and the detected data is outputted as a picture information detected data *c*. The picture quality compensating circuit 3 compensates the video input signal *a* to an optimum picture quality using the picture information detected data *c* and outputs as a video output signal *d*.

Thus, according to the first exemplary embodiment, a picture information detecting apparatus for a video signal can be realized which can detect an optimum picture information by detecting picture information using detected data in the designated area outputted from the picture information detecting circuit and compensating the video input signal at the picture quality compensating circuit.

### (Second exemplary embodiment)

FIG.5 is a block diagram of a picture information detecting apparatus for a video signal in accordance with a second exemplary embodiment of the present invention.

A picture area signal output circuit 1 detects a picture area excluding black band portions from a video input signal *a* and outputs as a picture area signal *b*. A picture information detecting circuit 2 detects picture information from the video input signal *a* in the area designated by the picture area signal *b* and outputs a picture information detected data *c*. A picture quality compensating circuit 3 compensates the video input signal *a* to an optimum picture quality using the picture information detected data *c* and outputs a video output signal *d*.

FIG.6 is a conceptional illustration of a picture when a picture with a different aspect ratio from that of the screen is displayed.

When a video signal with the same aspect ratio as that of the screen is inputted, the width and the height of the picture coincide with those of the screen and the whole screen area is covered with the picture. In this case, picture information of the video input signal is detected over the whole screen area, however, when a video signal with a different aspect ratio from that of the screen is inputted, the actual picture exsists only in the area indicated as A2 and there is no picture outside the area A2 which is hatched in FIG.6. (The video signal level coincides with the pedestal level.)

If picture information is detected in the area A1, the whole hatched area is judged (detected) as black. For example, when the minimum brightness level is detected from the video input signal, if the brightness level of the hatched area is lower than the minimum brightness level of the picture in the picture area A2 shown in FIG.6, the brightness level of the hatched area is sometimes detected as a minimum brightness level of the picture or when the average picture level (called APL, hereafter) of the video input signal is detected, the hatched area is sometimes detected as a black part of the picture. As a result, the detected APL appears to be lower than the correct APL in the picture area A2. Accordingly, the picture information detection has to be stopped during the period of the hatched area.

Therefore, the brightness level of the video input signal *a* is judges as follows. If there are continuous black area on the upper, lower, right or left portions of the picture, it is judged to be the portions corresponding to the hatched area shown in FIG.6 and the horizontal and vertical positions of the actual picture area A2 excluding the hatched area are detected at the picture area signal output circuit 1.

Whenever the picture area A2 varies, the horizontal and vertical positions are detected and only the picture area in the video input signal is always detected and the detected signal is outputted as a picture area signal *b* from the picture area signal output circuit 1.

The picture information detection is excuted only during the period for the picture area signal *b* at the picture information detecting circuit 2 and the picture information detection is not excuted during the period except the picture area A2. The detected data obtained here is outputted as a picture information detected data *c* and the video input signal *a* is compensated to an optimum picture quality based on the detected data *c* at a picture quality compensating circuit 3 and a compensated video signal *d* is outputted.

Thus, according to the second exemplary embodiment, a picture information detecting apparatus for a video signal can be realized which can detect an optimum picture information even when a video signal with a different aspect ratio from that of the screen is inputted by detecting picture information using a picture area signal corresponding to the picture obtained at the picture area signal output circuit and compensating the video input signal at the picture quality compensating circuit.

### (Third exemplary embodiment)

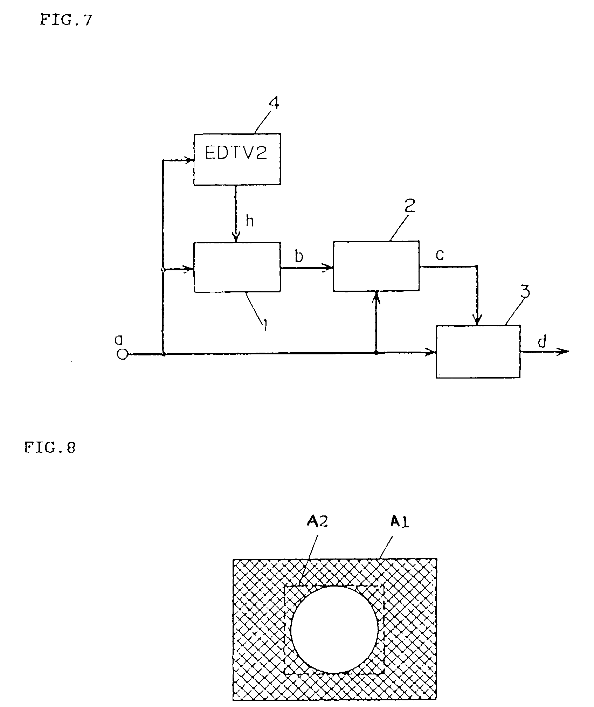

FIG.7 is a block diagram of a picture information detecting apparatus for a video signal in accordance with a third exemplary embodiment of the present invention. FIG.8 is a conceptional illustration of a scene which is easy to give misfunction at picture area detection.

An EDTV 2 discriminating circuit 4 discriminates if the video input signal is an EDTV 2 signal or not and the result is outputted as an EDTV 2 discriminating signal *h*. A picture area signal output circuit 1 fixes an aspect ratio of the picture area in which picture information is detected to 16:9, if the video input signal is judged to be an EDTV 2 signal by the EDTV discriminating signal *h* and outputs a picture area signal *b*. A picture information detecting circuit 2 detects picture information from the video input signal *a* in the area designated by the picture area signal *b* and outputs a picture information detected data *c*. A picture quality compensating circuit 3 compensates the video input signal *a* to an optimum picture quality using the picture information detected data *c* and outputs a video output signal *d*.

Similarly to the first and second exemplary embodiments, the picture area signal output circuit 1 outputs a picture area signal *b* but the picture area detection misfunctions for some pictures and the picture area signal output circuit 1 sometimes outputs an area signal with a different picture area from the actual picture area.

When the aspect ratio of the video input signal coincides with that of the screen, for example in a scene such as a moon in a night sky, in spite of that there is no area corresponding to the hatched area shown in FIG.6, the crosshatched area around the moon shown in FIG.8 is misjudged to be a hatched area. Therefore, the picture area signal output circuit 1 sometimes outputs a false picture area signal. However, when the aspect ratio of the video input signal is previously known, such a misfunction can be prevented by making the picture area signal *b* have the same aspect ratio as that of the video input signal.

Here, there is an EDTV 2 signal in various kinds of television signal standards as a signal which the aspect ratio of the essential picture information area is constant and the signal level of the area excluding the picture area is a black level. The aspect ratio of the EDTV 2 signal is determined to be 16:9 and an EDTV 2 discrimination control signal is inserted at the 22nd and 285th horizontal scanning periods in the EDTV 2 signal.

Decoding this control signal, an EDTV 2 discriminating data signal can be detected. If the signal is an EDTV 2 signal or not can be discriminated by the EDTV 2 discriminating data signal.

The EDTV 2 discriminating circuit 4 shown in FIG.7 detects an EDTV 2 discriminating data signal *h* from the video input signal *a* and discriminates if it is an EDTV 2 signal or not and outputs an EDTV 2 discriminating data signal *h*.

If the video input signal is discriminated to be an EDTV 2 signal, the picture area signal output circuit 1 outputs a picture area signal *b* which aspect ratio is fixed to 16:9 and prevents misfunction of the picture area detection due to special scene. When a video signal except an EDTV 2 signal is inputted, the picture area signal output circuit 1, the picture information detecting circuit 2 and the picture quality compensating circuit 3 function similarly to those in the first and second exemplary embodiments.

Thus, according to the third exemplary embodiment, a picture information detecting apparatus for a video signal can be realized which prevents misfunction of the picture area detection and can always stably detect picture information by outputting a picture area signal with aspect ratio 16:9 from the picture area signal output circuit, detecting picture information using the picture area signal, compensating the video input signal at the picture quality compensating circuit and outputting the compensated video signal, if the video input signal is discriminated to be an EDTV 2 signal at the EDTV 2 discriminating circuit.

The input signal can be a luminance signal, a chrominance signal, a color difference signal or a primary color signal instead of a video signal in the first, second and third exemplary embodiments. Similarly, any method to detect picture information such as white peak detection or histogram detection can be used as picture information detection instead of minimum brightness level detection or APL detection.

According to the present invention, a picture information detecting apparatus for a video signal which can detect optimum picture information even for a video input signal with a different aspect ratio from that of the screen can be realized by comprising a picture area signal output circuit, a picture information detecting circuit, an EDTV 2 discriminating circuit and a picture quality compensating circuit.

## Claims

1. Apparatus for adjusting picture quality of a video input signal comprising:
a picture area signal output circuit means (1) for outputting a signal which identifies a picture area of said video input signal;
a picture information detecting circuit means (2) for detecting picture information which is necessary for compensating the picture quality from said picture area of said video input signal identified by said picture area signal; and
a picture quality compensating circuit means (3) for compensating said video input signal to optimise picture quality on the basis of said detected picture information.

2. Apparatus according to claim 1, in which said picture area signal output circuit means (1) identifies said picture area using data specifying previously designated horizontal and vertical screen positions whereby said picture information is identified independent of the aspect ratio of the video input signal.

3. Apparatus according to claim 1, in which said picture area signal output circuit means (1) detects horizontal and vertical position data which enable detection of picture information from a video input signal with a different aspect ratio from the aspect ratio of a particular screen whereby optimum picture information is detected even if the aspect ratio of the video input signal is different from the aspect ratio of the screen.

4. Apparatus according to claim 1, further comprising:
a second generation extended definition television discriminating circuit means (4) for discriminating if the video input signal is a video signal having a second generation extended definition television standard with an aspect ratio 16:9 or not:
said picture area signal output circuit means (1) outputting a picture area signal fixing the horizontal and vertical positions to detect picture information so that the aspect ratio is 16:9 when the video input signal is judged to be a second generation extended definition television signal, whereby optimum picture information is detected when the second generation extended definition television signal with an aspect ratio 16:9 is input.

## Patentansprüche

1. Vorrichtung zur Einstellung der Bildqualität eines Videoeingangssignals, die umfaßt:
eine Bildbereichssignalausgangsschaltungseinrichtung (1) zur Ausgabe eines Signals, das einen Bildbereich des genannten Videoeingangssignals kennzeichnet;
eine Bildinformationserfassungsschaltungseinrichtung (2) zur Erfassung von Bildinformationen, die zum Ausgleich der Bildqualität notwendig sind, aus dem genannten Bildbereich des genannten Videoeingangssignals, der durch das genannte Bildbereichssignal gekennzeichnet ist; und
eine Bildqualitätsausgleichsschaltungseinrichtung (3) zum Ausgleich des genannten Videoeingangssignals, um die Bildqualität auf der Grundlage der genannten erfaßten Bildinformationen zu optimieren.

2. Vorrichtung gemäß Anspruch 1, in der die genannte Bildbereichssignalausgangsschaltungseinrichtung (1) den genannten Bildbereich kennzeichnet, wobei Daten verwendet werden, die vorhergehend bezeichnete horizontale und vertikale Bildschirmpositionen spezifizieren, wodurch die genannten Bildinformationen unabhängig von dem Bildseitenverhältnis des Videoeingangssignals erkannt werden.

3. Vorrichtung gemäß Anspruch 1, bei der die genannte Bildbereichssignalausgangsschaltungseinrichtung (1) horizontale und vertikale Positionsdaten erfaßt, die die Erfassung von Bildinformationen aus einem Videoeingangssignal mit einem Bildseitenverhältnis ermöglichen, das von dem Bildseitenverhältnis eines bestimmten Bildschirms verschieden ist, wodurch optimale Bildinformationen erfaßt werden, selbst wenn das Bildseitenverhältnis des Videoeinangssignals von dem Bildseitenverhältnis des Bildschirms verschieden ist.

4. Vorrichtung gemäß Anspruch 1, die des weiteren umfaßt:
eine Unterscheidungsschaltungseinrichtung (4) für hochauflösendes Fernsehen der zweiten Generation, um zu unterscheiden, ob das Videoeingangssignal ein Videosignal mit einer hochauflösenden Fernsehnorm der zweiten Generation mit einem Bildseitenverhältnis von 16:9 ist oder nicht;
die genannte Bildbereichssignalausgangsschaltungseinrichtung (1) ein Bildbereichssignal ausgibt, das die horizontalen und vertikalen Positionen festlegt, um Bildinformationen zu erfassen, so daß das Bildseitenverhältnis 16:9 ist, wenn das Videoeingangssignal als ein hochauflösendes Fernsehsignal der zweiten Generation beurteilt wird, wodurch optimale Bildinformationen erfaßt werden, wenn das hochauflösende Fernsehsignal der zweiten Generation mit einem Bildseitenverhältnis von 16:9 eingegeben wird.

## Revendications

1. Appareil d'ajustement de la qualité d'image d'un signal vidéo d'entrée, comprenant :
un circuit (1) de transmission d'un signal de zone d'image destiné à transmettre un signal qui identifie une zone d'image du signal vidéo d'entrée,
un circuit (2) de détection d'informations d'image destiné à détecter l'information d'image nécessaire à la compensation de la qualité de l'image à partir de la zone d'image du signal vidéo d'entrée identifiée par le signal de zone d'image, et
un circuit (3) de compensation de qualité d'image destiné à compenser le signal vidéo d'entrée pour optimiser la qualité d'image d'après l'information détectée d'image.

2. Appareil selon la revendication 1, dans lequel le circuit (1) de transmission d'un signal de zone d'image identifie la zone d'image à l'aide de données qui spécifient des positions horizontales et verticales de l'écran désignées auparavant, si bien que l'information d'image est identifiée indépendamment du rapport d'allongement du signal vidéo d'entrée.

3. Appareil selon la revendication 1, dans lequel le circuit (1) de transmission d'un signal de zone d'image détecte des données de positions horizontales et verticales qui permettent la détection d'informations d'image d'un signal vidéo d'entrée ayant un rapport d'allongement différent de celui d'un écran particulier, si bien que les informations optimales d'image sont détectées même lorsque le rapport d'allongement du signal vidéo d'entrée est différent du rapport d'allongement de l'écran.

4. Appareil selon la revendication 1, comprenant en outre :
un circuit (4) de discrimination de télévision à définition étendue de seconde génération destiné à déterminer si le signal vidéo d'entrée est un signal vidéo ayant une norme de télévision de définition étendue de seconde génération possédant un rapport d'allongement égal à 16/9 ou non,
le circuit (1) de transmission d'un signal de zone d'image transmettant un signal de zone d'image fixant les positions horizontales et verticales pour la détection d'informations d'image afin que le rapport d'allongement soit égal à 16/9 lorsque le signal vidéo d'entrée est déterminé comme étant un signal de télévision de définition étendue de seconde génération, si bien que des informations optimales d'image sont détectées lorsque le signal de télévision de définition étendue de seconde génération possédant un rapport d'allongement égal à 16/9 est transmis.
